# EUROPÄISCHE PATENTSCHRIFT

(11) **EP 0 501 198 B1**
(45) Veröffentlichungstag und Bekanntmachung des Hinweises auf die Patenterteilung: **23.08.1995**
(21) Anmeldenummer: 92102038.4
(22) Anmeldetag: 07.02.1992
(51) Int. Cl.: F04D 25/08

(54) **Durch einen bürstenlosen Gleichstrommotor angetriebenes Gebläse mit einem spiralförmigen Gehäuse**
Fan with a spiral casing driven by a DC-motor without collector
Ventilateur avec une volute entrainé par un moteur à courant continu sans collecteur

(30) Priorität: 27.02.1991 DE 4106130
(43) Veröffentlichungstag der Anmeldung: 02.09.1992
(73) Patentinhaber: Licentia Patent-Verwaltungs-GmbH, 60596 Frankfurt (DE)
(72) Erfinder: Witthohn, Lutz, W-2900 Oldenburg (DE); Tillner, Siegfried, W-2900 Oldenburg (DE); Oltmanns, Karl-Heinz, W-2900 Oldenburg (DE)
(74) Vertreter: Vogl, Leo, Dipl.-Ing.

(56) Entgegenhaltungen:
- EP-A- 0 345 796
- DE-A- 2 165 419
- DE-A- 3 916 791

## Beschreibung

Die Erfindung bezieht sich auf ein Gebläse angetrieben durch einen bürstenlosen Gleichstrommotor gemäß dem Oberbegriff des Anspruchs 1.

Da für die zulässige Leistung eines bürstenlosen Gleichstrommotors die Sperrschichttemperatur an den Endstufen-Transistoren der Steuer- oder Regelelektronik einen mitbestimmenden Faktor darstellt, ist eine wirksame Kühlung dieses Transistoren von maßgeblicher Bedeutung. Aus diesem Grund ist es üblich die Endstufen-Transistoren an separaten Kühlkörpern zu befestigen. Solche Kühlkörper sind kostenaufwendig und beanspruchen relativ viel Platz.

Durch die EP -A- 0345 796 ist ein durch einen bürstenlosen Gleichstrommotor angetriebenes Gebläse bekannt, das auch ein spiralförmiges Gehäuse aufweist, wobei eine mit Kühlrippen versehene Leiterplatte die zum Betrieb des Gleichstrommotors notwendigen elektronischen Bauteile trägt. Auch hierbei besteht zwar eine Wärmeleitkontakt zum Lüftergehäuse, aber das metallisch ausgebildete Spiralgehäuse weist im Bereich des Spiraleinlaufs an seiner Innenseite keine mit parallel zum Luftstrom verlaufenden Kühlrippen auf. Außerdem ist diesem Stand der Technik auch nicht zu entnehmen, daß die Wände des Elektronikgehäuses Bestandteil des metallischen Gehäuses sind.

Weiterhin ist durch die DE-A1-2165 419 eine Ventilatoreinheit bekannt, bei der die elektronischen Bauelemente auf Kühlrippen befestigt sind. Diese Kühlrippen werden aber nicht durch den durch die Ventilatoreinheit erzeugten Luftstrom laminar umströmt.

Der Erfindung liegt die Aufgabe zugrunde, die Wärmeabfuhr von Endstufen-Transistoren der Steuer- bzw. Regelelektronik des Antriebsmotors mit einem Geringstmaß an Aufwand zu optimieren.

Diese Aufgabe ist erfindungsgemäß mit den Merkmalen im kennzeichnenden Teil des Anspruchs 1 gelöst.

Durch diese Maßname wird eine laminare Durchströmung und demgemäß eine hohe Wärmeübergangszahl erzielt.

Weiterbildungen und zweckmäßige Ausgestaltungen der Erfindung sind in den Unteransprüchen angegeben.

Eine bevorzugte Ausführungsform der Erfindung wird im nachstehenden anhand der Zeichnung erläutert.

Es zeigen:
- Fig. 1: eine Ansicht des Spiralgehäuses des Gebläses von innen,
- Fig. 2: eine Ansicht des Spiralgehäuses von außen,
- Fig. 3: eine Ansicht entlang des Schnittes A-A durch Figur 2,
- Fig. 4a-Fig. 4b: verschiedene Anordnungen der Endstufentransistoren.

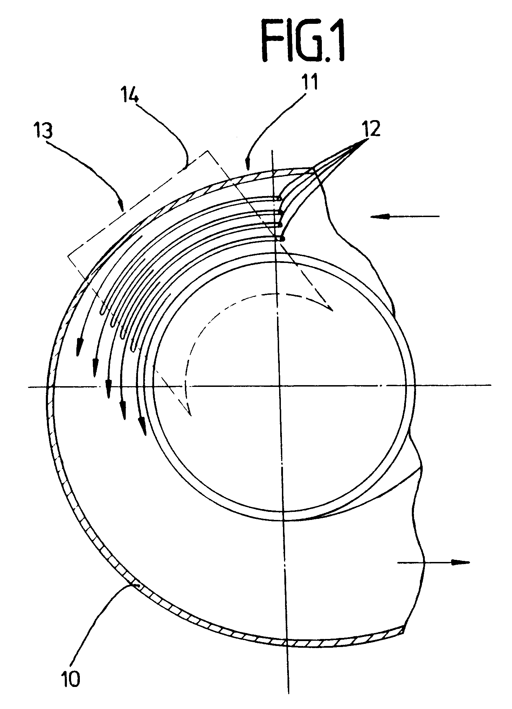

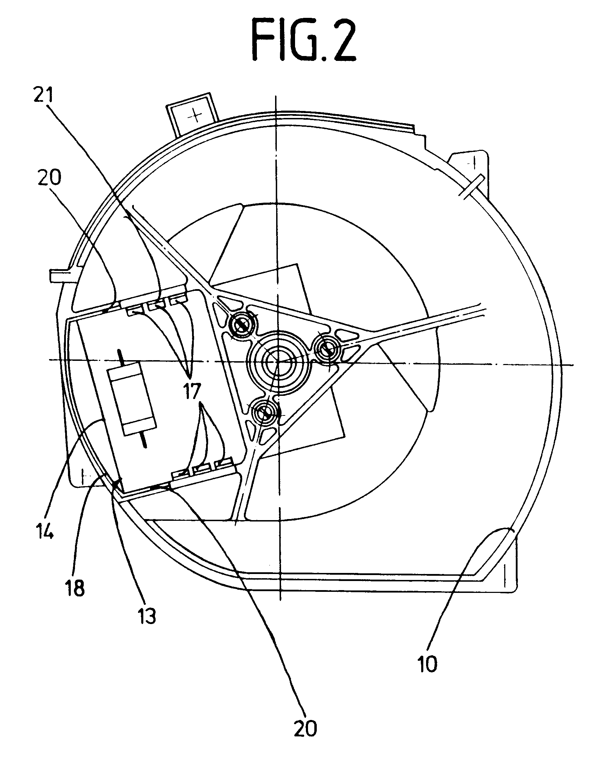

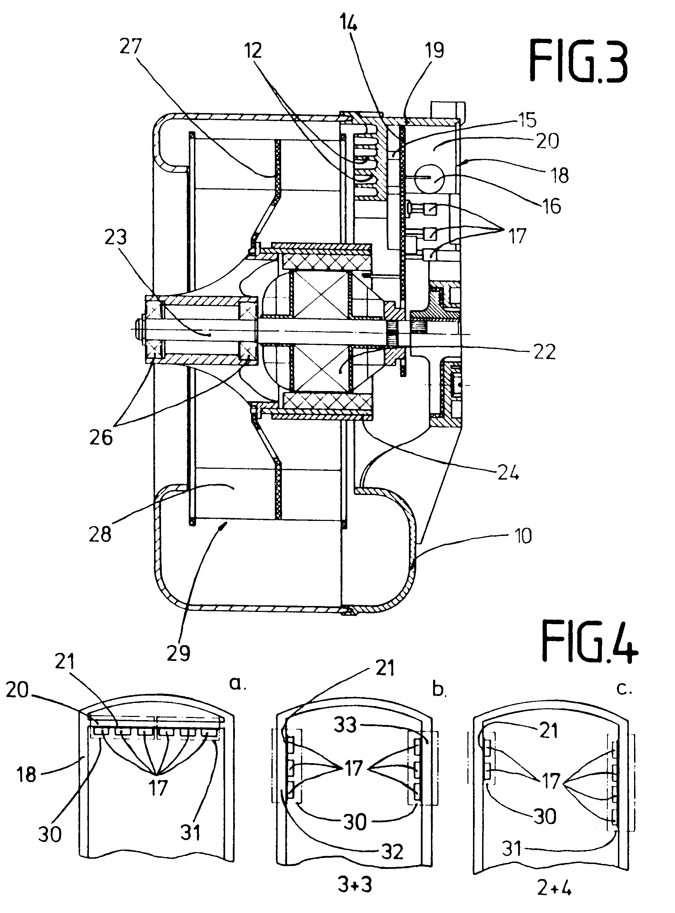

Wie aus den Figuren 1 bis 3 ersichtlich ist, weist das als Druckgußteil ausgebildete, beispielsweise aus Aluminium bestehende Spiralgehäuse 10 an der Innenseite des Spiraleinlaufs 11 parallel zum Luftstrom verlaufende Kühlrippen 12 auf. Die Steuer- bzw. Regelelektronik 13 ist auf einer Leiterplatte 14 angeordnet, die auf der Außenseite des mit Kühlrippen 12 versehenen Spiraleinlaufs mittels Distanzstücke 15 aus Isoliermaterial befestigt sind (siehe Fig. 3). Die beim Ausführungsbeispiel einen Kondensator 16 und sechs Endstufentransistoren 17 (Leistungstransistoren) enthaltende Elektronik 13 ist von einem Gehäuse 18 umgeben, dessen Wände 19,20 Bestandteil des Druckgußgehäuses 10 sind.

Die Gehäuse der Endstufentransistoren 17 sind unter Zwischenlage einer elekrisch isolierenden Schicht 21 mit Hilfe einer geeigneten Klammer oder dgl. Halteelement lösbar an den Wandungen 20 des Elektronikgehäuses 18 befestigt und damit wärmeschlüssig mit dem metallischen Spiralgehäuse verbunden. Zur Verbesserung der Wärmeabfuhr hat es sich als vorteilhaft erwiesen, die Endstufentransistoren 17 nicht an einer Wandung bzw. Rippe des Spiralgehäuses anzuordnen, sondern gruppenweise an verschiedenen Rippen.

In Figur 3 ist der Stator des Außenläufermotors mit 22 bezeichnet. Auf der feststehenden Statorwelle 23 ist der Rotor 24 mit den Permanentmagneten 25 mittels zweier Kugellager 26 drehbar gelagert. Am Rotor 24 ist eine abgekröpfte Scheibe 27 befestigt, die als Träger des mit Schaufeln 28 versehenen Gebläserads 29 dient.

Wie Figur 4a zeigt, sind hier die sechs erforderlichen Endstufentransistoren 17 nebeneinander an der Wandung 20 des Elektronikgehäuses 18, das Bestandteil des Druckgußgehäuses 10 ist, gehalten. Die Endstufentransistoren 17 sind dabei mittels zweier Halteklammern 30 und 31 an die Wandung 20 des Druckguß- bzw. Elektronikgehäuses angepreßt.

Im Falle der Fig. 4 b sind je drei Endstufentransistoren 17 an je einem Quersteg 32 und 33 des Spiralgehäuses 10 angebracht, beim Ausführungsbeispiel nach Fig. 4c umfassen die beiden Gruppen einmal zwei und einem vier Endstufentransistoren.

Der die Schaufeln 28 des Gebläserads 29 abdeckende Teil 10' des Spiralgehäuses 10 besteht beim Ausführungsbeispiel aus Kunststoff.

Es hat sich gezeigt, daß mit der erfindungsgemäßen Maßnahme eine Reduzierung der Sperrschichttemperatur an den Endstufentransistoren um ca. 20 bis 25 K erreicht wird.

## Patentansprüche

1. Gebläse, angetrieben durch einen bürstenlosen Gleichstrommotor mit einem spiralförmigen Gehäuse aus Metall und mit an Kühlkörpern angebrachten Endstufen-Transistoren der Steuer- bzw. Regelelektronik für den Antriebsmotor, **dadurch gekennzeichnet**, daß das Spiralgehäuse (10) im Bereich des Spiraleinlaufs an seiner Innenseite mit parallel zum Luftstrom verlaufenden Kühlrippen (12) versehen ist, daß das die Steuer- bzw. Regelelektronik (13) aufnehmende Gehäuse (18) in wärmeschlüssiger Verbindung mit dem die Kühlrippen (12) enthaltenden Teil des Spiralgehäuses (10) steht und daß die Wände (19, 20) des Elektronikgehäuses (18) Bestandteil des metallischen Spiralgehäuses (10) sind.

2. Gebläse nach Anspruch 1, **dadurch gekennzeichnet**, daß die Gehäuse der Endstufen-Transistoren (17) uter Zwischenlage eine elektrisch islolierenden Schicht (21) an die Wandung (20) des Elektronikgehäuses (18) angeklammert sind.

3. Gebläse nach Anspruch 1 oder 2, dadurch gekennzeichnet, daß die Endstufen-Transistoren (17) gruppenweise an quer zur Wandung (20) des Elektronikgehäuses verlaufenden metallischen Stegen (32, 33) wärmeschlüssig gehalten sind.

## Claims

1. Blower, driven by a brushless direct-current motor, with a spirally-shaped housing of metal and with end stage transistors, which are mounted at cooling bodies, of the control or regulating electronic system for the drive motor, characterised thereby that the spiral housing (10) is provided in the region of the spiral entry at its inner side with cooling ribs (12) extending parallel to the air flow, that the housing (18) receiving the control or regulating electronic system (13) stands in thermally conductive connection with the part of the spiral housing (10) containing the cooling ribs (12) and that the walls (19, 20) of the electronic system housing (18) are component of the metal spiral housing (10).

2. Blower according to claim 1, characterised thereby that the housings of the end stage transistors (17) are clamped to the wall (20) of the electronic system housing (18) with interposition of an electrically insulating layer (21).

3. Blower according to claim 1 or 2, characterised thereby that the end stage transistors (17) are thermally conductively retained in groups at metallic webs (32, 33) extending transversely to the wall (20) of the electronic system housing.

## Revendications

1. Ventilateur, entraîné par un moteur à courant continu sans balai comprenant un carter métallique spiralé et des transistors de puissance mis en place sur des corps de refroidissement et destinés à l'électronique de régulation respectivement de commande pour le moteur d'entraînement, caractérisé en ce que le carter spirale (10) est muni, à la naissance de la spirale sur la face interne, de nervures de refroidissement (12) s'étendant parallèlement au courant d'air en ce que le coffret (18) renfermant l'électronique de réglage respectivement de commande (13) est en contact thermique avec la partie comprenant les nervures de refroidissement (12) du carter spiralé (10) et en ce que les parois (19, 20) du coffret (18) de l'électronique font partie du carter métallique spiralé (10).

2. Ventilateur selon la revendication 1 ou 2 caractérisé en ce que les boîtiers des transistors de puissance (17) sont accrochés à la paroi (20) du coffret (18) de l'électronique en intercalant une couche électriquement isolante (21).

3. Ventilateur selon la revendication 1 ou 2, caractérisé en ce que les transistors de puissance (17) sont maintenus en groupe par contact thermique contre les traverses métalliques (32, 33) s'étendant transversalement à la paroi (20) du coffret de l'électronique.
